# FASCICULE DE BREVET EUROPEEN

(11) **EP 3 039 304 B1**
(45) Date de publication et mention de la délivrance du brevet: **30.10.2019**
(21) Numéro de dépôt: 14758541.8
(22) Date de dépôt: 01.09.2014
(51) Int. Cl.: F16B 25/00, F16B 37/00

(54) **ELÉMENT DE FIXATION FILETÉ**
BEFESTIGUNGSELEMENT MIT GEWINDE
THREADED FASTENING ELEMENT

(30) Priorité: 30.08.2013 FR 1358348
(43) Date de publication de la demande: 06.07.2016
(73) Titulaire: Faurecia Intérieur Industrie, 92000 Nanterre (FR)
(72) Inventeur: LARD, Frédéric, F-60000 Saint Martin Le Noeud (FR)
(74) Mandataire: Lavoix
(86) Numéro de dépôt international: PCT/EP2014/068496
(87) Numéro de publication internationale: WO 2015/028661

(56) Documents cités:
- DE-A1- 3 117 624
- DE-A1- 3 929 332
- DE-A1- 19 956 906
- DE-A1-102010 043 589
- DE-U1-202012 001 847

## Description

La présente invention concerne un élément de fixation fileté, en particulier pour la fixation mécanique de pièces d'équipement de véhicule, notamment de véhicule automobile.

US2004/0081535A1 divulgue une vis comprenant une tête de vis et une pointe effilée, la vis possédant un filet s'étendant sur un tronçon arrière adjacent à la tête de vis, le filet étant asymétrique et incliné à l'opposé de la tête de vis, et un filet s'étendant sur un tronçon avant adjacent à la pointe de la vis, le filet étant asymétrique et incliné vers la tête de vis.

DE2020012001847U1, DE19956906A1, divulguent chacun une vis comprenant un filet dont l'angle au sommet varie.

DE3929332A1 et DE3117624A1 divulguent chacun une vis ayant des tronçons portant des filets ayant des angles au sommet différents.

Un des buts de l'invention est de fournir un élément de fixation fileté auto-taraudant ou auto-formant qui puisse être vissé facilement tout en retenant efficacement des pièces qu'il maintient ensemble.

A cet effet, l'invention propose un élément de fixation fileté selon la revendication 1. Des caractéristiques optionnelles de l'élément de fixation fileté figurent aux revendications 2 à 12.

L'invention et ses avantages seront mieux compris à la lecture de la description qui va suivre, donnée uniquement à titre d'exemple, et faite en référence à l'unique Figure illustrant une vue en demi-coupe d'un élément de fixation fileté sous la forme d'une vis.

L'élément de fixation fileté représenté sur la Figure est une vis 2 comprenant une tige 4 filetée s'étendant suivant un axe central A. La tige 4 s'étend entre une première extrémité 6 et une deuxième extrémité 8.

La vis 2 comprend une tête de vis 10 solidaire de la tige 4. La tête de vis 10 est reliée à la première extrémité 6. La deuxième extrémité 8 opposée à la tête de vis 10 est libre.

La tête de vis 10 est configurée pour l'entraînement en rotation de la vis 2 autour de l'axe central A à l'aide d'un outil de vissage.

A cet effet, la tête de vis 10 comprend une empreinte 11 à contour cruciforme, hexagonal ou multilobé. Comme représenté sur la Figure, l'empreinte 11 s'étend en partie à l'intérieur de la tige 4.

D'autres reliefs d'entraînement formés en creux dans la tête de vis 10 sont envisageables. L'empreinte 11 pourrait être remplacée par une fente.

En variante ou en option, la tête de vis 10 comprend un contour externe prévu pour coopérer avec un outil. La tête de vis 10 présente par exemple un contour externe hexagonal.

La vis 2 possède un filetage 14 formée sur la surface extérieure de la tige 4. Le filetage 14 s'étend suivant l'axe central A. Le filetage 14 comprend au moins un filet continu s'étendant en hélice autour de l'axe central A, ici un seul filet 16

En vue en section, le filet 16 possède une base 18, un sommet 20 et deux flancs 22, chaque flanc 22 s'étendant entre la base 18 et le sommet 20. Les deux flancs 22 du filet 16 convergent de la base 18 vers le sommet 20. Les deux flancs 22 convergent vers le sommet 20 en formant entre eux un angle désigné « angle au sommet » du filet 16.

Le profil du filet 16 désigne son contour en vue en section. Le filet 16 est ici à profil triangulaire. Les deux flancs 20 se rejoignent en formant sensiblement une pointe.

Le filet 16 possède plusieurs spires. Une spire correspond à un tour complet du filet autour de l'axe central A. Sur la Figure, chaque spire correspond à une dent.

Le filet 16 a un angle au sommet diminuant progressivement, de manière continue et monotone, entre un premier angle au sommet α1 et un deuxième angle au sommet α2 strictement inférieur au premier angle au sommet.

La diminution de l'angle au sommet s'effectue sur plusieurs spires. Elle s'effectue ici sur trois spires S1, S2 S3.

Le filetage 14 comprend par exemple un tronçon sur lequel s'effectue la diminution de l'angle au sommet, et au moins un autre tronçon sur lequel le filet a un angle au sommet constant.

Dans l'exemple illustré, le filetage 14 comprend suivant l'axe central A, consécutivement, un premier tronçon 24, suivi d'un tronçon de variation 26, suivi d'un deuxième tronçon 28. Chacun du premier tronçon 24, du deuxième tronçon 28 et du tronçon de variation 26 s'étend axialement sur une portion de longueur respective du filetage 14.

Le premier tronçon 24 s'étend à partir du tronçon de variation 26 vers la première extrémité 6. Le premier tronçon 24 prolonge le tronçon de variation 26 axialement vers la première extrémité 6. Le filet 16 s'étend continûment sur le premier tronçon 24 et le tronçon de variation 26.

Le deuxième tronçon 28 s'étend du tronçon de variation 26 vers la deuxième extrémité 8. Le deuxième tronçon 28 prolonge le tronçon de variation 26 axialement vers la deuxième extrémité 8. Le filet 16 s'étend continûment sur le tronçon de variation 26 et le deuxième tronçon 28.

L'angle au sommet du filet 16 est constant sur le premier tronçon 24 et égal à un premier angle au sommet α1. Le filet 16 possède plusieurs spires sur le premier tronçon 24. L'angle au sommet du filet 16 est constant sur le premier tronçon 24.

L'angle au sommet du filet 16 est constant sur le deuxième tronçon 28 et égal à un deuxième angle au sommet α2 strictement inférieur au premier angle au sommet α1. Le filet 16 possède plusieurs spires sur le deuxième tronçon 28. L'angle au sommet du filet 16 est constant sur le deuxième tronçon 28.

Le filet 16 possède sur le tronçon de variation 26, un angle au sommet α diminuant progressivement, de manière continue et monotone, du premier angle au sommet α1 au deuxième angle au sommet α2 strictement inférieur au premier angle au sommet α1.

Le filet 16 comprend plusieurs spires sur le tronçon de variation 26, ici les trois spires S1, S2, S3. L'angle au sommet du filet 16 varie d'une spire à l'autre.

Sur le tronçon de variation 26, l'angle au sommet des spires S1, S2, S3 du filet 16 diminue progressivement en considérant les spires consécutivement de l'extrémité du tronçon de variation 26 à laquelle le filet 16 possède le premier angle au sommet, jusqu'à l'extrémité du tronçon de variation 26 à laquelle le filet 16 possède le deuxième angle au sommet.

De préférence, chacune des spires S1, S2, S3 du tronçon de variation 26 présente un angle au sommet strictement supérieur à celui de la spire suivante en considérant les spires successivement de l'extrémité du tronçon de variation 26 à laquelle le filet 16 possède le premier angle au sommet, jusqu'à l'extrémité du tronçon de variation 26 à laquelle le filet 16 possède le deuxième angle au sommet.

Dans l'exemple illustré, le filet 16 possède un premier angle au sommet α1 de 60° et un deuxième angle au sommet α2 de 44°. Sur le tronçon de variation 26, le filet 16 possède un angle au sommet variant progressivement de 60° à 44°.

La variation de l'angle au sommet du filet 16 est de préférence constante. La variation d'angle au sommet est la variation de l'angle au sommet en fonction de la longueur parcourue le long du filet ou de l'angle parcouru autour de l'axe central.

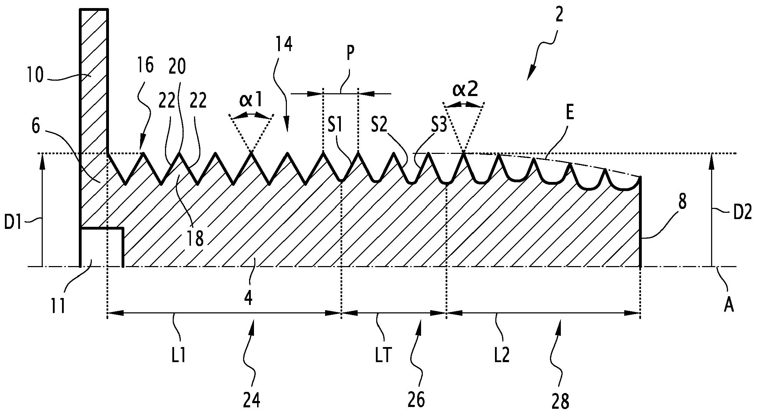

Dans l'exemple de la Figure 1, la variation est de 4° d'angle au sommet par spire. Le filet 16 possède trois spires S1, S2, S3 sur le tronçon de variation 26, possédant des angles au sommet de respectivement 56°, 52° et 48° en parcourant les spires S1, S2, S3 du premier tronçon 24 vers le deuxième tronçon 28.

Le pas P du filet 16 est la distance axiale, prise suivant l'axe central L, entre les sommets de deux spires consécutives du filet 16.

Le filet 16 possède ici un pas P constant sur chacun du premier tronçon 24, du tronçon de variation 26 et du deuxième tronçon 28. Le pas P du filet 16 est constant sur toute la longueur du filetage 14. En variante, le pas du filet varie d'un tronçon à l'autre et/ou le long d'au moins un tronçon.

Le diamètre du filetage 14 correspond au diamètre de l'enveloppe fictive passant par les sommets du filet 16 formant le filetage.

Le deuxième tronçon 28 du filetage 14 possède ici un diamètre externe D2 décroissant lorsque l'on s'éloigne du tronçon de variation 26. La tige 4 filetée présente donc une extrémité libre s'effilant. En vue de côté, les sommets des spires adjacentes à l'extrémité libre situées d'un côté de l'axe central A suivent une courbe E à concavité tournée vers l'axe central A. La courbe présente ici un rayon de courbure constant.

Dans l'exemple illustré, le premier tronçon 24 du filetage 14 possède un diamètre externe D1 constant sur le premier tronçon 24. Le tronçon de variation 26 possède également un diamètre constant, égal au diamètre D1 du premier tronçon 24.

En variante, le filetage 14 possède un diamètre évolutif, qui augmente lorsque l'on se déplace le long du filetage 14, de sa partie possédant le deuxième angle au sommet vers sa partie possédant le premier angle au sommet, c'est-à-dire lorsque l'on se déplace de la deuxième extrémité 8 vers la première extrémité 6 de la vis 2. Le diamètre augmente sur toute la longueur du filetage ou sur un ou plusieurs tronçons de diamètre variable alternant avec un ou plusieurs tronçons de diamètres constants.

Dans un mode de réalisation particulier, le filetage 14 possède un tronçon de variation 26 de diamètre constant et un premier tronçon 24 de diamètre croissant en s'éloignant du tronçon de variation 26. L'augmentation de diamètre est par exemple de l'ordre de 0.05 à 0.2 mm, notamment de 0.05 à 0.01 mm sur le premier tronçon 24. Cette augmentation de diamètre permet d'assurer une fonction de frein filet, c'est-à-dire un maintien du couple de serrage de la vis dans le temps, notamment lorsque les pièces assemblées à l'aide de la vis sont soumises à des vibrations.

Dans un autre mode de réalisation particulier, le filetage 14 possède un tronçon de variation 26 ayant un diamètre qui varie sur le tronçon de variation 26, et plus spécifiquement qui augmente lorsque l'on se déplace le long du tronçon de variation 26 de la partie du filetage 14 possédant le deuxième angle au sommet vers la partie du filetage 14 possédant le premier angle au sommet. Le filetage 14 est dépourvu de premier tronçon ou possède un premier tronçon 24 ayant un diamètre constant ou ayant un diamètre croissant dans le même sens que le tronçon de variation 26.

Dans l'exemple illustré, le filet 16 est symétrique : les deux flancs 20 du filet 16 s'étendent symétriquement de part et d'autre d'un plan transversal perpendiculaire à l'axe centrale passant par le sommet du filet 16. Chaque flanc 20 fait avec ce plan un angle sensiblement égal à la moitié de l'angle au sommet du filet 16. Le filet 16 est symétrique sur le tronçon de variation 26, sur le premier tronçon 24 et/ou sur le deuxième tronçon 28.

En variante, le filet est asymétrique : les deux flancs du filet forment des angles respectifs différents avec plan transversal perpendiculaire à l'axe central et passant par le sommet du filet. Dans ce cas, le filet est asymétrique sur le tronçon de variation, sur le premier tronçon et/ou sur le deuxième tronçon.

La vis 2 est une vis auto-taraudante ou auto-formante propre à former, lors du premier vissage, un taraudage (ou filetage interne) dans la matière de la surface interne d'orifices en regard de pièces dans lequel la vis 2 est visée. Le taraudage est formé avec enlèvement de matière (vis auto-taraudante) ou par déformation sans enlèvement de matière (vis auto-formante).

Lors du premier vissage, la matière de l'orifice est repoussée par le filet 16 de la vis. La vis 2 est insérée par sa pointe, de sorte que, le taraudage est formé successivement par le deuxième tronçon 28, le tronçon de variation 26 et le premier tronçon 24.

Du fait du deuxième angle au sommet faible, le filet 16 pénètre facilement dans la matière de la surface interne de l'orifice lors de l'initiation du taraudage, ce qui facilite cette opération. La variation de l'angle au sommet, ici sur le tronçon de variation 26, permet de faire une variation progressive entre le deuxième angle au sommet et le premier angle au sommet, ce qui facilite le vissage complet de la vis pour un opérateur. Le taraudage est formé progressivement. Un premier tronçon 24 sur lequel le filet possède un angle au sommet plus élevé permet d'assurer une fixation avec un couple résiduel élevé. Ainsi, la vis 2 auto-taraudante est vissée facilement tout en assurant une fixation fiable et durable des pièces qu'elle maintient ensemble. L'extrémité libre effilée de la vis 2 facilite son insertion et son centrage au début du vissage. La conjugaison de la variation progressive entre le deuxième angle au sommet et le premier angle au sommet avec la variation progressive du diamètre de l'extrémité libre de la vis 2, permet de diminuer le couple de formation du filet dans les pièces dans lequel la vis est vissée.

La vis est en particulier adaptée pour un vissage dans des tôles métalliques. Des pièces réunies par la vis sont par exemple des pièces d'équipement de véhicule, notamment de véhicule automobile. Une pièce est par exemple une traverse de planche de bord, une autre pièce étant par exemple un montant latéral avant (ou montant A), une traverse inférieure de baie ou un tablier de séparation de l'habitacle et du compartiment moteur. Dans un mode de réalisation particulier, la vis est une vis à métaux autoformante.

Avantageusement, le filetage 14 est, dans le premier tronçon 24 possédant le premier angle au sommet α1, du type métrique (ou isométrique). Le premier angle au sommet est égal à 60°. Le filetage 14 est triangulaire : le ou chaque filet 16 présente un profil triangulaire. De préférence, le premier tronçon s'étend sur plusieurs spires et/ou présente un diamètre constant. Le filetage 14 isométrique sur le premier tronçon permet de former facilement un taraudage isométrique lors du premier vissage de la vis 2. Le filetage isométrique ainsi formé permet, si nécessaire, de remplacer la vis 2 par une vis à filetage isométrique du commerce.

Le premier tronçon s'étend sur une première longueur L1, le tronçon de variation s'étend sur une longueur LT et le deuxième tronçon s'étend sur une deuxième longueur L2.

Dans un exemple de réalisation, la longueur de variation LT est inférieure à la première longueur L1 et à la deuxième longueur L2. La première longueur L1 et la deuxième longueur L2 sont par exemple sensiblement identiques. La première L1 longueur et la deuxième longueur L2 sont par exemple de l'ordre de 5 mm, la longueur de variation LT étant de l'ordre de 2 mm.

Dans l'exemple illustré, le tronçon de variation 26 est un tronçon intermédiaire entre le premier tronçon 24 et le deuxième tronçon 28.

En variante le tronçon de variation 26 est un tronçon d'extrémité du filetage 14. Le filetage 14 est dans ce cas dépourvu de premier tronçon avec un premier angle au sommet α1 constant et/ou de deuxième tronçon avec un deuxième angle au sommet α2 constant.

Dans un mode de réalisation particulier, le filetage 14 correspond à celui de la Figure mais est dépourvu de deuxième tronçon. Le filetage 14 comprend un premier tronçon 24 avec le premier angle au sommet constant et un tronçon de variation 26 avec un angle au somment variant progressivement, de manière continue et monotone, du premier angle au sommet α1 à un deuxième angle au sommet α2 strictement inférieur au premier angle au somment, le tronçon de variation 26 terminant le filetage 14.

Dans un exemple de réalisation de filetage sans deuxième tronçon, la deuxième longueur L2 est nulle, et la longueur de variation LT est par exemple égale ou supérieure à la première longueur L1.

Dans un mode de réalisation particulier, le filetage 14 comprend exclusivement un tronçon de variation sur lequel l'angle au somment du filet varie progressivement, de manière continue et monotone, d'un premier angle au sommet α1 à un deuxième angle au sommet α2 strictement inférieur au premier angle au somment. En d'autres termes, le filetage 14 possède un filet dont l'angle au sommet diminue progressivement, de manière continue et monotone, d'un premier angle au sommet α1 à un deuxième angle au sommet α2 strictement inférieur au premier angle au sommet, sur toute la longueur du filet.

Comme illustré sur la Figure, l'angle au sommet du filetage 14 diminue de la tête de vis 10 vers l'extrémité libre de la tige 4. L'angle au sommet diminue sur le tronçon de variation 26 parcouru de la tête de vis 10 vers l'extrémité libre, le tronçon de variation 26 étant éventuellement prolongé par un premier tronçon 24 sur lequel le filet 16 présente un angle au sommet constant égal au premier angle au sommet α1 et/ou un deuxième tronçon 28 sur lequel le filet 16 possède un angle au sommet constant égal au deuxième angle au sommet α2.

De préférence, comme illustré sur la Figure, la tige 4 s'effile à son extrémité libre 8 en étant tronquée. Son diamètre diminue progressivement en direction de l'extrémité libre 8 jusqu'à atteindre un diamètre minimal non nul. L'extrémité libre 8 est dépourvue de pointe. Ceci permet d'obtenir une vis compacte tout en assurant un vissage fiable et durable grâce au filetage particulier.

Avantageusement, le filetage 14 s'étend jusqu'à l'extrémité 8 libre. Le deuxième tronçon 28, sur lequel le filetage 14 a un deuxième angle au sommet constant, termine la tige filetée 14 à son extrémité 8 libre, lorsqu'un tel deuxième tronçon est prévu, comme sur la Figure. En variante, le tronçon de variation 26 termine la tige filetée 14 à son extrémité 8 libre, lorsqu'un deuxième tronçon 28 n'est pas prévu.

L'invention n'est pas limitée à un filetage comprenant un seul filet, mais s'applique aussi un filetage comprenant plusieurs filets parallèles.

Ainsi, de manière générale, un élément de fixation fileté possède un filetage comprenant un ou plusieurs filets, au moins un filet présentant un angle au sommet diminuant progressivement, de manière continue et monotone, entre un premier angle au sommet et un deuxième angle au sommet strictement inférieur au premier angle au sommet.

## Revendications

1. Elément de fixation fileté (2) comprenant une tige (4) filetée s'étendant suivant un axe central (A) entre une première extrémité (6) et une deuxième extrémité (8), une tête de vis (10) reliée à la première extrémité (6), la deuxième extrémité (8) opposée à la tête de vis (10) étant libre, et un filetage (14) formé sur la tige (4) filetée et s'étendant suivant l'axe central (A), le filetage (14) possédant au moins un filet (16), dans lequel ledit filet (16) a un angle au sommet diminuant progressivement, de manière continue et monotone, entre un premier angle au sommet (α1) et un deuxième angle au sommet (α2) strictement inférieur au premier angle au sommet, dans lequel le filetage (14) comprend au moins un tronçon de variation (26), sur lequel s'effectue la diminution de l'angle au sommet, la diminution de l'angle au sommet s'effectuant sur plusieurs spires du filet (16), et un premier tronçon (24) prolongeant le tronçon de variation vers la première extrémité (6) et sur lequel le filet (16) présente un angle au sommet constant égal au premier angle au sommet (α1).

2. Elément de fixation fileté selon la revendication 1, dans lequel la diminution de l'angle au sommet s'effectue avec un pas (P) constant entre les spires du filet (16).

3. Elément de fixation fileté selon l'une quelconque des revendications précédentes, dans lequel le premier tronçon (24) est de diamètre constant ou de diamètre augmentant progressivement en s'éloignant du tronçon de variation (26).

4. Elément de fixation fileté selon l'une quelconque des revendications précédentes, dans lequel le filet (16) possède un pas (P) constant sur le premier tronçon (26).

5. Elément de fixation fileté selon l'une quelconque des revendications précédentes, dans lequel le filetage (14) comprend un deuxième tronçon (28) prolongeant le tronçon de variation (26) vers la deuxième extrémité (8) et sur lequel le filet (16) possède un angle au sommet constant égal au deuxième angle au sommet (α2).

6. Elément fileté selon la revendication 5, dans lequel le filet possède un pas (P) constant sur le deuxième tronçon (28).

7. Elément de fixation fileté selon la revendication 5 ou 6, dans lequel le diamètre du deuxième tronçon (28) diminue progressivement en s'éloignant du tronçon de variation (26).

8. Elément de fixation fileté selon l'une quelconque des revendications 1 à 4, dans lequel le tronçon de variation (26) est un tronçon terminal du filetage (14).

9. Elément de fixation fileté selon l'une quelconque des revendications précédentes, dans lequel la tige s'effile à sa deuxième extrémité (8) en étant tronquée.

10. Elément de fixation fileté selon l'une quelconque des revendications précédentes, formant une vis auto-formante ou auto-taraudante.

11. Elément de fixation fileté selon l'une quelconque des revendications précédentes, dans lequel le premier angle au sommet (α1) est égal à 60°.

12. Elément de fixation fileté selon l'une quelconque des revendications précédentes, dans lequel le filetage (14) est à profil triangulaire.

## Patentansprüche

1. Fixierungs-Gewindeelement (2), aufweisend einen Gewinde-Schaft (4), der sich entlang einer zentralen Achse (A) zwischen einem ersten Ende (6) und einem zweiten Ende (8) erstreckt, einen Schraubenkopf (10), der mit dem ersten Ende (6) verbunden ist, wobei das zu dem Schraubenkopf (10) entgegengesetzte, zweite Ende (8) frei ist, und ein Gewinde (14), das auf dem Gewinde-Schaft (4) ausgebildet ist und sich entlang der zentralen Achse (A) erstreckt, wobei das Gewinde (14) wenigstens einen Gewindegang (16) hat, wobei der Gewindegang (16) einen Spitzenwinkel hat, der sich in kontinuierlicher und monotoner Weise progressiv verringert zwischen einem ersten Spitzenwinkel (α1) und einem zweiten Spitzenwinkel (α2), der strikt kleiner als der erste Spitzenwinkel ist, wobei das Gewinde (14) aufweist wenigstens einen Wechselabschnitt (26), in welchem die Verringerung des Spitzenwinkels erfolgt, wobei die Verringerung des Spitzenwinkels über mehrere Windungen des Gewindegangs (16) hinweg erfolgt, und einen ersten Abschnitt (24), der den Wechselabschnitt zu dem ersten Ende (6) hin verlängert und in welchem der Gewindegang (16) einen konstanten Spitzenwinkel hat, der gleich dem ersten Spitzenwinkel (α1) ist.

2. Fixierungs-Gewindeelement gemäß Anspruch 1, wobei die Verringerung des Spitzenwinkels bei einer konstanten Teilung (P) zwischen den Windungen des Gewindegangs (16) erfolgt.

3. Fixierungs-Gewindeelement gemäß irgendeinem der vorhergehenden Ansprüche, wobei der erste Abschnitt (24), den Wechselabschnitt (26) verlängernd, einen konstanten Durchmesser oder einen sich progressiv vergrößernden Durchmesser hat.

4. Fixierungs-Gewindeelement gemäß irgendeinem der vorhergehenden Ansprüche, wobei der Gewindegang (16) in dem ersten Abschnitt (26) eine konstante Teilung (P) hat.

5. Fixierungs-Gewindeelement gemäß irgendeinem der vorhergehenden Ansprüche, wobei das Gewinde (14) einen zweiten Abschnitt (28) aufweist, der den Wechselabschnitt (26) zu dem zweiten Ende (8) hin verlängert und in welchem der Gewindegang (16) einen konstanten Spitzenwinkel hat, der gleich dem zweiten Spitzenwinkel (α2) ist.

6. Gewindeelement gemäß Anspruch 5, wobei der Gewindegang in dem zweiten Abschnitt (28) eine konstante Teilung (P) hat.

7. Fixierungs-Gewindeelement gemäß Anspruch 5 oder 6, wobei der Durchmesser des zweiten Abschnitts (28), den Wechselabschnitt (26) verlängernd, sich progressiv verringert.

8. Fixierungs-Gewindeelement gemäß irgendeinem der Ansprüche 1 bis 4, wobei der Wechselabschnitt (26) ein Endabschnitt des Gewindes (14) ist.

9. Fixierungs-Gewindeelement gemäß irgendeinem der vorhergehenden Ansprüche, wobei der Schaft sich an seinem zweiten Ende (8) verjüngt und stumpf endet.

10. Fixierungs-Gewindeelement gemäß irgendeinem der vorhergehenden Ansprüche, welches eine selbstformende oder selbstschneidende Schraube bildet.

11. Fixierungs-Gewindeelement gemäß irgendeinem der vorhergehenden Ansprüche, wobei der erste Spitzenwinkel (α1) gleich 60° ist.

12. Fixierungs-Gewindeelement gemäß irgendeinem der vorhergehenden Ansprüche, wobei das Gewinde (14) ein Dreiecksprofil ist.

## Claims

1. A threaded fastening element (2) comprising a threaded shank (4) extending along a central axis (A) between a first end (6) and a second end (8), a screw head (10) connected to the first end (6), the second end (8) opposite the screw head (10) being free, and a threading (14) formed on the threaded shank (4) and extending along the central axis (A), the threading (14) having at least one screw thread (16), wherein said screw thread (16) has an apical angle decreasing gradually, continuously and monotonously, between a first apical angle (α1) and a second apical angle (α2) strictly smaller than the first apical angle, wherein the threading (14) comprises at least one variation segment (26) over which the decrease in the apical angle occurs, the decrease in the apical angle being done over several turns, and a first segment (24) extending from the variation segment towards the first end (6) and over which the screw thread (16) has a constant apical angle equal to the first apical angle (α1).

2. The threaded fastening element according to claim 1, wherein the decrease in the apical angle occurs with a constant pitch (P) between the turns of the screw thread (16).

3. The threaded fastening element according to any one of the preceding claims, wherein the first segment (24) has a constant diameter or a diameter increasing gradually moving away from the variation segment (26).

4. The threaded fastening element according to any one of the preceding claims, wherein the screw thread (16) has a constant pitch (P) over the first segment (26).

5. The threaded fastening element according to any one of the preceding claims, wherein the threading (14) comprises a second segment (28) extending from the variation segment (26) towards the second end (8) and over which the screw thread (16) has a constant apical angle equal to the second apical angle (α2).

6. The threaded element according to claim 5, wherein the screw thread has a constant pitch (P) over the second segment (28).

7. The threaded fastening element according to claim 5 or 6, wherein the diameter of the second segment (28) decreases gradually moving away from the variation segment (26).

8. The threaded fastening element according to any one of claims 1 to 4, wherein the variation segment (26) is an end segment of the threading (14).

9. The threaded fastening element according to any one of the preceding claims, wherein the shank tappers at its second end (8) while being truncated.

10. The threaded fastening element according to any one of the preceding claims, forming a self-forming or self-tapping screw.

11. The threaded fastening element according to any one of the preceding claims, wherein the first apical angle (α1) is equal to 60°.

12. The threaded fastening element according to any one of the preceding claims, wherein the threading (14) has a triangular profile.
